# EUROPÄISCHE PATENTANMELDUNG

(11) **EP 3 876 047 A1**
(43) Veröffentlichungstag der Anmeldung: **08.09.2021**
(21) Anmeldenummer: 20160949.2
(22) Anmeldetag: 04.03.2020
(51) Int. Cl.: G05B 19/042, G05B 19/05, G05B 19/406

(54) **VERFAHREN UND SICHERHEITSGERICHTETE STEUERUNGSEINRICHTUNG ZUR ERMITTLUNG UND/ODER AUSWAHL EINES SICHEREN ZUSTANDS**

(71) Anmelder: Siemens Aktiengesellschaft, 80333 München (DE)
(72) Erfinder: Schiller, Frank Dittrich, 90409 Nürnberg (DE)

(57) **Zusammenfassung**

Die vorliegende Erfindung betrifft ein Verfahren zur Ermittlung eines sicheren Zustands unter Verwendung einer sicherheitsgerichteten Steuerungseinrichtung (100),
wobei
- die sicherheitsgerichtete Steuerungseinrichtung (100) zur sicherheitsgerichteten Steuerung einer Vorrichtung oder Anlage (200) vermittels des Ablaufs eines sicherheitsgerichteten Steuerprogramms ausgebildet und eingerichtet ist,
- und im Rahmen eines Ablaufs des sicherheitsgerichteten Steuerprogramms in der sicherheitsgerichteten Steuerung (100) eine sichere Reaktion ausgelöst wird,
wobei das Verfahren weiterhin derart ausgebildet und eingerichtet ist,
- dass ein ML-Modell (134) vorgesehen ist, wobei das ML-Modell (134) als ein in einer Speichereinrichtung (112, 132) gespeichertes Ergebnis der Anwendung eines maschinellen Lernverfahrens eingerichtet und ausgebildet ist,
- dass im Zusammenhang mit dem Auslösen der sicheren Reaktion für das Ermitteln eines sicheren Zustands relevante Daten (116) gespeichert werden,
- dass vermittels einer Anwendung der für das Ermitteln eines sicheren Zustands relevanten Daten (116) auf das ML-Modell (134) ein erster sicherer Zustand (310, 320, 330, 340) ermittelt wird.

## Beschreibung

Die vorliegende Erfindung betrifft ein Verfahren zur Ermittlung eines sicheren Zustands unter Verwendung einer sicherheitsgerichteten Steuerungseinrichtung sowie eine entsprechend eingerichtete sicherheitsgerichtete Steuerung. Dabei ist die sicherheitsgerichtete Steuerungseinrichtung zur sicherheitsgerichteten Steuerung einer Vorrichtung oder Anlage vermittels des Ablaufs eines sicherheitsgerichteten Steuerprogramms ausgebildet und eingerichtet,
wobei im Rahmen eines Ablaufs des sicherheitsgerichteten Steuerprogramms in der sicherheitsgerichteten Steuerung eine sichere Reaktion ausgelöst wird.

Derartige Verfahren sind aus dem Stand der Technik bekannt. So offenbart z.B. die Patentschrift US 9,823,959 B2 eine Microcontroller-Einheit, die zum Betrieb von Anwendungen zur Realisierung von Funktionaler Sicherheit ausgebildet und eingerichtet ist. Dabei weist die Microcontroller-Einheit ein Reset-Zustand als sicheren Zustand auf, um auf entsprechende Fehlerquellen reagieren zu können. Optional kann die Microcontroller-Einheit auch mehrere sichere Zustände aufweisen. Im Rahmen der US 9,823,959 B2 können Fehlerquellen beispielsweise eine fehlerhafte Temperatur oder eine Über-Spannung sein, welche dann das Zurücksetzen der Microcontroller-Einheit in den Reset-Zustand auslösen.

Häufig gibt es genau einen sicheren Zustand, der in einer sicherheitskritischen Situation eingenommen wird (Stopp der Fertigungsanlage, Öffnen eines Ventils etc.). In jüngster Zeit wird immer öfter applikationspezifisch eine Menge von sicheren Zuständen definiert, die in Abhängigkeit verschiedener Betriebsparameter eingenommen werden können. Jeder dieser Zustände verhindert in der betrachteten sicherheitskritischen Situation die Gefahr.

Es ist ein Nachteil des Standes der Technik, dass dem Fachmann keinerlei Hinweis darauf gegeben wird, wie ein sicherer Zustand im Rahmen funktionaler Sicherheit ausgewählt wird. Sobald also beispielsweise kein genau vordefinierter sicherer Zustand fest vorgegeben ist, oder falls nicht nur ein genau vordefinierter sicherer Zustand vorgegeben ist, hat der Fachmann keinerlei Information, wie er in einem Fehlerfall im Rahmen funktionaler Sicherheit den sicheren Zustand wählen kann, oder auch, wie ein System am besten in einen fest vorgegebenen sicheren Zustand gebracht wird.

Daher ist es eine Aufgabe der vorliegenden Erfindung, ein Verfahren zur Bestimmung und/oder Auswahl eines sicheren Zustands im Rahmen funktionaler Sicherheit zur Verfügung zu stellen.

Diese Aufgabe wird gelöst durch ein Verfahren mit den Merkmalen des Patentanspruch 1.

Ein solches Verfahren ist zur Ermittlung eines sicheren Zustands unter Verwendung einer sicherheitsgerichteten Steuerungseinrichtung ausgebildet und eingerichtet, wobei die sicherheitsgerichtete Steuerungseinrichtung zur sicherheitsgerichteten Steuerung einer Vorrichtung oder Anlage vermittels des Ablaufs eines sicherheitsgerichteten Steuerprogramms ausgebildet und eingerichtet ist, und wobei im Rahmen eines Ablaufs des sicherheitsgerichteten Steuerprogramms in der sicherheitsgerichteten Steuerung eine sichere Reaktion ausgelöst wird.

Weiterhin ist ein ML-Modell vorgesehen, wobei das ML-Modell als ein in einer Speichereinrichtung gespeichertes Ergebnis der Anwendung eines maschinellen Lernverfahrens eingerichtet und ausgebildet ist.

Im Zusammenhang mit dem Auslösen der sicheren Reaktion werden dann für das Ermitteln eines sicheren Zustands relevante Daten gespeichert, wonach vermittels einer Anwendung der für das Ermitteln eines sicheren Zustands relevanten Daten auf das ML-Modell ein erster sicherer Zustand ermittelt wird.

Dabei kann das Verfahren weiterhin derart ausgebildet und eingerichtet sein, dass nachfolgend der Ermittlung des ersten sicheren Zustands die Maschine oder Anlage durch die sicherheitsgerichtete Steuereinrichtung in den ersten sicheren Zustand gebracht wird.

Ganz allgemein können in Bezug auf die Sicherheit im Maschinen-, Anlagen- und/oder Produktionsumfeld drei Aspekte der Systemsicherheit betrachtet werden.

Ein erster Aspekt ist eine "primäre Sicherheit", die Risiken wie Stromschlag und Verbrennungen betrifft, die direkt von der Hardware verursacht werden.

Ein zweiter Aspekt ist eine sogenannte "funktionale Sicherheit", die die Sicherheit von Geräten (sogenanntes "EUC" - siehe unten) umfasst, wobei diese funktionale Sicherheit von den betreffenden Maßnahmen zur Risikominderung abhängt und somit mit dem ordnungsgemäßen Funktionieren dieser Maßnahmen zusammenhängt.

Ein dritter Aspekt ist eine indirekte Sicherheit, die die indirekten Folgen einer nicht ordnungsgemäßen Funktionsweise eines Systems betrifft, wie z.B. die Erzeugung falscher Informationen durch ein Informationssystem wie eine medizinische Datenbank.

Der Standard "IEC 61508" betrifft im Wesentlichen den zweiten dieser Aspekte, nämlich die funktionale Sicherheit. Die dort verwendeten Grundsätze sind aber durchaus auch allgemein anwendbar.

Im Bereich der Sicherheit im Umgang mit bzw. der Steuerung von Maschinen und Anlagen gibt es weiterhin drei besonders erwähnenswerte, branchenspezifische Normen, die gegebenenfalls zusätzlich zur IEC 61508 relevant sein können. Die deutsche Norm DIN 19250 mit dem Titel "Grundlegende Sicherheitsbetrachtungen für MSR-Schutzeinrichtungen" wurde bereits vor den ersten Entwürfen der internationalen Norm entwickelt, und ihr Inhalt wurde darin verwendet. Die US-Norm S84 wurde zeitgleich mit dem Vorläufer der IEC 61508 entwickelt, und sie wurde ihren Prinzipien entsprechend gestaltet. Weiterhin wurde die internationale Norm IEC 61511 nach der IEC 61508 entwickelt, um eine echte branchenspezifische Interpretation für die Prozessindustrie zu ermöglichen.

Nachfolgend einige Definitionen, die in Anlehnung an Teil 4 der IEC 61508 formuliert sind, und im Rahmen der vorliegenden Beschreibung verwendet werden. Die zur Definition ausgewählten Begriffe sind diejenigen, die für die Leser dieses Dokuments als am wichtigsten erachtet werden.

"Kontrollierte Ausrüstung": (das sogenannte "EUC": "Equipment Under Control"): Ausrüstung, Maschinen, Apparate oder Anlagen, die für Herstellungs-, Prozess-, Transport-, medizinische oder andere Tätigkeiten verwendet werden.

"EUC-Steuerungssystem": System, das auf Eingangssignale aus dem Prozess und/oder von einem Bediener reagiert und Ausgangssignale erzeugt, die bewirken, dass das EUC in der gewünschten Weise arbeitet.

"Programmierbares elektronisches System (PES)" bzw. "Elektrisches/elektronisches/programmierbares elektronisches System (E/E/PE)": jeweils ein System zum Steuern, Schützen oder Überwachen basierend auf einer oder mehreren programmierbaren elektronischen Vorrichtungen, einschließlich aller Elemente des Systems wie Stromversorgungen, Sensoren und andere Eingabevorrichtungen, Datenautobahnen und andere Kommunikationswege sowie Stellglieder und andere Ausgabevorrichtungen.

"Sicherheit": Freiheit von inakzeptablem Risiko.

"Sicherer Zustand": Zustand einer Maschine oder Anlage, in welchem kein inakzeptables Risiko durch die Vorrichtung oder Anlage vorliegt.

"Sicherheitsbezogenes System": ein System, das
- die erforderlichen Sicherheitsfunktionen implementiert, die erforderlich sind, um einen sicheren Zustand für die EUC zu erreichen oder aufrechtzuerhalten; und
- dazu bestimmt ist, allein oder mit anderen sicherheitsrelevanten E/E/PE-Systemen, anderen sicherheitsrelevanten Technologien oder externen Einrichtungen zur Risikominderung die erforderliche Sicherheitsintegrität für die erforderlichen Sicherheitsfunktionen zu erreichen.

"Funktionale Sicherheit": Teil der Gesamtsicherheit im Zusammenhang mit der EUC und dem EUC-Leitsystem, der von der ordnungsgemäßen Funktion der sicherheitsrelevanten Systeme E/E/PE, anderer sicherheitsrelevanter Systeme der Technologie und externer Einrichtungen zur Risikominderung abhängt.

"Sicherheitsfunktion": Funktion, die von einem sicherheitsbezogenen E/E/PE-System, einem anderen sicherheitsbezogenen Technologiesystem oder externen Risikominderungseinrichtungen zu erfüllen ist, die einen sicheren Zustand für die EUC in Bezug auf ein bestimmtes gefährliches Ereignis erreichen oder aufrechterhalten sollen.

"Sicherheitsintegrität": Wahrscheinlichkeit, dass ein sicherheitsbezogenes System die erforderlichen Sicherheitsfunktionen unter allen angegebenen Bedingungen innerhalb eines bestimmten Zeitraums zufriedenstellend ausführt.

"Software-Sicherheitsintegrität": Maßnahmen die dafür sorgen, dass die Software eines programmierbaren elektronischen Systems die entsprechenden Sicherheitsfunktionen unter allen festgelegten Bedingungen innerhalb einer festgelegten Zeit erreicht.

"Hardware-Sicherheitsintegrität": Teil der Sicherheitsintegrität von Sicherheits-bezogenen Systemen, welche sich auf zufällige Hardware-Fehler in einem gefährlichen Zustand beziehen.

"Sicherheitsintegritätslevel (SIL)": diskreter Level (einer von vier möglichen Levels) zur Festlegung der Sicherheitsintegritätsanforderungen der Sicherheitsfunktionen, die den sicherheitsbezogenen E/E/PE-Systemen zuzuordnen sind, wobei SIL 4 das höchste Maß an Sicherheitsintegrität und SIL 1 das niedrigste Maß an Sicherheitsintegrität darstellt.

"Spezifikation der Sicherheits-Erfordernisse": Spezifikation, die alle Erfordernisse bezüglich Sicherheitsfunktionen enthält, die ein sicherheitsgerichtetes System ausführen muss.

"Spezifikation der Anforderungen an Sicherheitsfunktionen": Spezifikation, die die Anforderungen an die Sicherheitsfunktionen enthält, die von den sicherheitsbezogenen Systemen ausgeführt werden müssen. [Ein Teil der Sicherheitsanforderungs-Spezifikationen].

"Spezifikation der Sicherheitsintegritätsanforderungen": Spezifikation, die die Anforderungen an die Sicherheitsintegrität der Sicherheitsfunktionen enthält, die von den sicherheitsbezogenen Systemen ausgeführt werden müssen. Dies ist in die Spezifikation der Sicherheitsanforderungen integriert.

Eine sicherheitsgerichtete Steuerungseinrichtung kann derart ausgebildet und eingerichtet sein, das garantiert werden kann, dass beim Betrieb der sicherheitsgerichteten Steuerungseinrichtung kein gefährlicher Zustand entstehen kann, beispielsweise durch einen Ausfall einer Komponente. Eine sicherheitsgerichtete Steuerungseinrichtung kann weiterhin derart ausgebildet und eingerichtet sein, dass beim Betrieb der sicherheitsgerichteten Steuerungseinrichtung kein inakzeptables Risiko durch eine von diese, oder zumindest unter anderem durch diese, gesteuerte die Vorrichtung oder Anlage entstehen kann.

In einer sicherheitsgerichteten Steuerungseinrichtung können beispielsweise die nachfolgend aufgeführten Mechanismen im Rahmen einer Software- und/oder Hardware-Sicherheitsintegrität ganz oder teilweise implementiert sein:
- zur Erkennung von zufälligen Fehlern werden in der sicherheitsgerichteten Steuerungseinrichtung andauernd Selbsttests durchgeführt, bei welchen beispielsweise die Verfügbarkeit einer zentralen Baugruppe, von Eingabe-Ausgabe-Karten, von Schnittstellen sowie von Peripherie überprüft wird;
- es kann eine redundante Auslegung der Hardware vorliegen, um Fehler in der Hardware bzw. beim Ablauf des Steuerungsprogramms erkennen zu können;
- es kann beim Ablauf eines Steuerungsprogramms ein sogenanntes "Coded Processing" vorgesehen sein, um Fehler im Ablauf des Steuerungsprogramms erkennen zu können;
- durch eine doppelte Compilierung des Steuerungsprogramms und Vergleich der erzeugten Maschinencodes sind Fehler im Fall von Diskrepanzen erkennbar;
- in den redundanten Speichereinheiten (RAM, EPROM, ...) werden die Daten direkt und invers gespeichert und durch einen Hardwarevergleicher auf Ungleichheit geprüft;
- es können zusätzliche Test- und Überwachungsfunktionen ausgeführt werden: Überwachung der Netzspannung, Test der Zentraleinheiten hinsichtlich der Beschreibbarkeit von Flags, Adressierbarkeit, Registerüberlauf und ähnlichem, Tests der Eingangskanäle, Tests der Ausgangskanäle, Tests der Datenübertragung über einen internen Bus.

Insbesondere kann eine sicherheitsgerichtete Steuerungseinrichtung konform mit mindestens einem der Standards IEC 61508, DIN 19520 oder IEC 61511 ausgebildet und eingerichtet sein.

Die sicherheitsgerichtete Steuerungseinrichtung kann beispielsweise als eine sogenannte speicherprogrammierbare Steuerung (SPS) ausgebildet und eingerichtet sein. Weiterhin kann die sicherheitsgerichtete Steuerungseinrichtung auch als eine sogenannte modulare speicherprogrammierbare Steuerung (modulare SPS) eingerichtet und ausgestaltet sein.

Die sicherheitsgerichtete Steuerungseinrichtung kann weiterhin auch als ein sogenanntes "EDGE-Device" ausgebildet und eingerichtet sein, wobei ein solches EDGE-Device beispielsweise eine Applikation zur Steuerung von Vorrichtungen oder Anlagen, insbesondere zur Steuerung der Vorrichtung oder Anlage, umfassen kann. Beispielsweise kann eine solche Applikation als eine Applikation mit der Funktionalität einer speicherprogrammierbaren Steuerung ausgebildet und eingerichtet sein. Das EDGE Device kann dabei beispielsweise weiterhin mit einer Steuereinrichtung einer sicherheitsgerichteten Anlage verbunden sein oder auch unmittelbar mit der sicherheitsgerichteten Anlage, einer zu steuernden Vorrichtung oder Anlage oder der gesteuerten Vorrichtung oder Anlage. Weiterhin kann das EDGE Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Ein sicherheitsgerichtetes Steuerprogramm kann derart ausgebildet und eingerichtet sein, das sichergestellt ist, dass beim Ablauf des sicherheitsgerichteten Steuerprogramms im Rahmen der Steuerung der Vorrichtung oder Anlage kein gefährlicher Zustand entstehen kann, beispielsweise durch einen Ausfall einer Komponente. Ein sicherheitsgerichtetes Steuerprogramm kann derart ausgebildet und eingerichtet sein, dass beim Ablauf des sicherheitsgerichteten Steuerprogramms im Rahmen der Steuerung der Vorrichtung oder Anlage kein inakzeptables Risiko durch die Vorrichtung oder Anlage entstehen kann.

Insbesondere kann ein sicherheitsgerichtetes Steuerprogramm konform mit mindestens einem der Standards IEC 61508, DIN 19520 oder IEC 61511 ausgebildet und eingerichtet sein.

Der erste sichere Zustand, und ganz generell jeder sichere Zustand, kann beispielsweise ein durch definierte Vorrichtungs- oder Anlagen-Parameter festgelegter Zustand sein. Weiterhin kann der erste sichere Zustand bzw. ein sicherer Zustand ganz allgemein, beispielsweise auch als ein sicherer Zustand gemäß dem Standard IEC 61508, DIN 19520 und/oder IEC 61511 ausgebildet und eingerichtet sein.

Solche definierten Vorrichtungs- oder Anlagenparameter können z.B. bestimmte Einzelwerte für solche Vorrichtungs- oder Anlagenparameter oder entsprechende Kombinationen davon umfassen. Weiterhin können die definierte Vorrichtungs- oder Anlagenparameter auch Wertebereiche für bestimmte Maschinen- oder Anlagenparameter umfassen.

Es können für eine Vorrichtung oder Anlage bzw. ein sicherheitsgerichtetes System, auch mehrere sichere Zustände definiert bzw. vorgegeben sein, wobei jeder der sicheren Zustände gemäß der vorliegenden Beschreibung ausgebildet und eingerichtet sein kann.

Sicheren Zustände können beispielsweise durch das Abschalten, Anhalten und/oder Stromlos-Machen einer Vorrichtung oder Anlage gegeben sein. Weiterhin können sichere Zustände beispielsweise durch eine bestimmte Position oder Lage einer Maschine oder Anlage bzw. von jeweils Teilen davon gegeben sein. Sichere Zustände können beispielsweise auch durch einen Stillstand oder eine bestimmte Geschwindigkeit der Vorrichtung oder Anlage bzw. von Teilen davon gegeben sein.

Wertebereiche für Vorrichtungs- oder Anlagenparameter können beispielsweise Parameterbereiche sein, die zu einem bestimmten Positions- oder Lage-Bereich für die Vorrichtung oder Anlage, bzw. jeweils Teilen davon, führt. Entsprechend können Wertebereiche für Vorrichtungs- oder Anlagenparameter beispielsweise Parameterbereiche sein, die zu einem bestimmten Geschwindigkeitsbereich für die Vorrichtung oder Anlage bzw. jeweils Teilen davon führt.

Ein sicherer Zustand, bzw. der erste sichere Zustand, kann auch durch eine Abfolge von Parameterwerten gegeben sein. So kann die Abfolge von Parameterwerten beispielsweise derart ausgebildet und eingerichtet sein, dass die Vorrichtung oder Anlage oder jeweilige Teile oder Komponenten davon nacheinander entsprechend der Abfolge von Parameterwerten den jeweiligen Parameterwerten entsprechende Betriebszustände einnimmt. Auf diese Weise kann der sichere Zustand auch als eine Abfolge von Zuständen definiert sein, die letztendlich zu einem sicheren Erreichen eines sicheren Endzustands führen.

Die Vorrichtung oder Anlage kann beispielsweise als eine Maschine, ein Gerät, ein Roboter, eine Produktionsanlage oder Vergleichbares ausgebildet und eingerichtet sein oder auch derartige Teile als Komponenten umfassen. Solch eine Vorrichtung oder Anlage kann z.B. ein oder mehrere Komponenten, Antriebe, Sensoren, Maschinen, Geräte, Kommunikationseinrichtungen oder Ähnliches umfassen.

Ein ML-Modell kann ganz allgemein z.B. als ein in einer Speichereinrichtung gespeichertes Ergebnis der Anwendung eines maschinellen Lernverfahrens auf bestimmte Trainingsdaten, insbesondere ML-Trainingsdaten gemäß der vorliegenden Beschreibung, ausgebildet und eingerichtet sein.

Dabei kann die sicherheitsgerichtete Steuerungseinrichtung die Speichereinrichtung umfassen. Weiterhin kann die Speichereinrichtung auch kommunikativ mit der sicherheitsgerichteten Steuerungseinrichtung gekoppelt sein.

Dabei wird unter einem maschinellen Lernverfahren beispielsweise ein automatisiertes ("maschinelles") Verfahren verstanden, welches Ergebnisse nicht durch im Vorhinein festgelegte Regeln generiert sondern bei welchem vermittels eines maschinellen Lernalgorithmus oder Lernverfahrens aus mehreren oder auch vielen Beispielen (automatisch) Regelmäßigkeiten identifiziert werden auf deren Basis dann Aussagen über zu analysierende Daten erzeugt werden.

Solche maschinellen Lernverfahren können beispielsweise als ein überwachtes Lernverfahren, ein teilüberwachtes Lernverfahren, ein unüberwachtes Lernverfahren oder auch ein bestärkendes Lernverfahren ("Reinforcement Learning") ausgebildet und eingerichtet sein.

Beispiele für maschinelle Lernverfahren sind z.B. Regressions-Algorithmen (z.B. lineare Regressionsalgorithmen), eine Erzeugung oder Optimierung von Entscheidungsbäumen (sogenannte "Decision Trees"), Lernverfahren für neuronale Netze, Clustering-Verfahren (z.B. ein sogenanntes "k-means-Clustering"), Lernverfahren für oder Erzeugung von Stützvektormaschinen ("Support Vector Machines" (SVM)), Lernverfahren für oder Erzeugung von sequentiellen Entscheidungsmodellen oder Lernverfahren für oder Erzeugung von Bayessche Modellen oder Netzen.

Das Ergebnis einer solchen Anwendung eines solchen maschinellen Lernalgorithmus oder Lernverfahrens auf bestimmte Daten wird, insbesondere in der vorliegenden Beschreibung, als "Machine-Learning"-Modell oder ML-Modell bezeichnet. Ein solche ML-Modell stellt dabei das digital gespeicherte oder speicherbare Ergebnis der Anwendung eines maschinellen Lernalgorithmus oder Lernverfahrens auf analysierte Daten dar.

Dabei kann die Erzeugung des ML-Modells derart ausgebildet und eingerichtet sein, dass dass das ML-Modell durch die Anwendung des maschinellen Lernverfahrens neu gebildet wird oder ein bereits bestehendes ML-Modell durch die Anwendung des maschinellen Lernverfahrens verändert oder angepasst wird. Beispiele für solche ML-Modelle sind Ergebnisse von Regressions-Alogrithmen (z.B. eines linearen Regressions-Algorithmus), Neuronale Netze ("Neural Networks"), Entscheidungsbäume ("Decision Tree"), die Ergebnisse von Clustering-Verfahren (inklusive z.B. der erhaltenen Cluster oder Cluster-Kategorien, -Definitionen und/oder -Parameter), Stützvektormaschinen ("Support Vector Machines" (SVM)), Sequentielle Entscheidungsmodelle oder Bayessche Modelle oder Netze.

Neuronale Netze können dabei z.B. sogenannte "Deep Neural Networks", "Feed Forward Neural Networks", "Recurrent Neural Networks"; "Convolutional Neural Networks" oder "Autoencoder-Neural-Networks" sein. Dabei wird die Anwendung entsprechender maschineller Lernverfahren auf neuronale Netze häufig auch als "Training" des entsprechenden Neuronalen Netzes bezeichnet.

Entscheidungsbäume können beispielsweise als sogenannte "Iterative Dichotomizer 3" (ID3), Klassifikations- oder Regressionsbäume (CART) oder auch sogenannte "Random Forests" ausgebildet und eingerichtet sein.

ML-Trainingsdaten zum Trainieren des ML-Modells können beispielsweise aufgezeichnete bzw. gespeicherte Daten sein, die jeweils charakteristisch für das Auslösen einer sicheren Reaktion waren oder sind. Weiterhin können solche ML-Trainingsdaten auch aufgezeichnete oder gespeicherte Daten sein, die für das Ermitteln eines sicheren Zustands im Rahmen funktionaler Sicherheit relevant waren oder sind.

Solche ML-Trainingsdaten zum Trainieren des ML-Modells können z.B. historische Steuerungsdaten bezüglich der Vorrichtung oder Anlage sein. Insbesondere können solche historischen Steuerungsdaten bezüglich sicherheitsgerichteter Vorkommnisse gelabelte Steuerungsdaten sein.

Solche historische Steuerungsdaten können z.B. in der Vergangenheit aufgezeichnete Werte von einer oder mehreren Variablen des sicherheitsgerichteten Steuerprogramms sein bzw. solche Daten umfassen. Weiterhin können solche historischen Steuerungsdaten auch in der Vergangenheit aufgezeichnete Werte eines Prozessabbilds einer sicherheitsgerichteten Speicherprogrammierbaren Steuerung sein bzw, die im Rahmen einer sicherheitsgerichteten Steuerung der Vorrichtung oder Anlage im Prozessabbild vorlagen, bzw. solche Daten umfassen.

Das Labeln bzw. Bezeichnen der historischen Steuerungsdaten kann beispielsweise derart ausbildet und eingerichtet sein, dass historischen Steuerungsdaten, die zu einem sicherheitsgerichteten Vorkommnis geführt hatten, ein sicherer Zustand und/oder eine Abfolge von sicheren Zuständen derart zugeordnet wird, dass z.B. ein möglichst geringer wirtschaftlicher Schaden durch das Auftreten des sicherheitsgerichteten Vorkommnisses entsteht.

So kann beispielsweise je nach auftretendem sicherheitsgerichteten Vorkommnis ein Vorrichtungs- oder Anlagen-Stillstand ausgelöst werden (z.B., wenn sich eine Person in einem gefährlichen Bereich befindet) oder auch nur eine Betriebsgeschwindigkeit reduziert werden (wenn z.B. eine bestimmte Komponente eine erhöhte Temperatur aufweist).

Weiterhin können ML-Trainingsdaten auch im Rahmen der sicherheitsgerichteten Steuerung der Vorrichtung oder Anlage ermittelt und/oder gespeichert werden. Dabei können beispielsweise im Rahmen des Auslösens einer sicheren Reaktion Variablen, Sensorwerte, Steuergrößen, Parameterwerte und/oder ähnliche Werte gespeichert werden. Weiterhin kann dazu eine Kennung für den aufgetretenen Fehlerfall und/oder Informationen zu einem bevorzugten sicheren Zustand bzw. einer bevorzugten Abfolge von sicheren Zuständen gespeichert werden. Dann kann nachfolgend das ML-Modell unter Verwendung dieser gespeicherten Daten trainiert werden.

Auch hier können der sichere Zustand bzw. die Abfolgen von sicheren Zuständen derart ausgewählt werden, dass ein möglichst geringer wirtschaftlicher Schaden durch das Auftreten des sicherheitsgerichteten Vorkommnisses entsteht.

Unter einem neuronalen Netz wird, zumindest im Zusammenhang mit der vorliegenden Beschreibung, eine elektronische Einrichtung verstanden, welche ein Netzwerk sogenannter Knoten umfasst, wobei in der Regel jeder Knoten mit mehreren anderen Knoten verbunden ist. Die Knoten werden beispielsweise auch als Neuronen, Units oder Einheiten bezeichnet. Dabei hat jeder Knoten mindestens eine Eingangs- und eine Ausgangsverbindung. Als Eingangs-Knoten für ein neuronales Netz, werden solche Knoten verstanden, welche von der Außenwelt Signale (Daten, Reize, Muster oder ähnliches) empfangen können. Unter Ausgabe-Knoten eines neuronalen Netzes werden solche Knoten verstanden, welche Signale, Daten oder ähnliches an die Außenwelt weitergeben können. Unter sogenannten "verdeckten Knoten" ("hidden nodes") werden weiterhin solche Knoten eines neuronalen Netzes verstanden, welche weder als Eingangs- noch als Ausgangs-Knoten ausgebildet sind.

Dabei kann das neuronale Netz beispielsweise als ein sogenanntes tiefes neuronales Netz ("deep neural network" (DNN)) ausgebildet sein. Ein solches "deep neural network" ist ein neuronales Netz, in welchem die Netzknoten in Schichten angeordnet sind (wobei die Schichten selbst ein-, zwei- oder auch höher-dimensional sein können). Ein tiefes neuronales Netz umfasst dabei mindestens eine oder zwei sogenannte verdeckte Schichten, welche nur Knoten umfassen, die nicht Eingangsknoten oder Ausgangsknoten sind. Das heißt, die verdeckten Schichten haben keine Verbindungen zu Eingangssignalen oder Ausgangssignalen.

Unter dem sogenannten "Deep Learning" wird dabei beispielsweise eine Klasse von maschinellen Lerntechniken oder Lernverfahren verstanden, welche mehrere oder auch viele Schichten der nichtlinearen Informationsverarbeitung für die überwachte oder nicht-überwachte Merkmalsextraktion und -transformation sowie zur Musteranalyse und -klassifizierung ausnutzt.

Das Neuronales Netz kann beispielsweise weiterhin - oder auch zusätzlich - auch eine so genannte Auto-Encoder-Struktur aufweisen, welche im Verlauf der vorliegenden Beschreibung noch näher erläutert wird. Eine derartige Auto-Encoder-Struktur kann beispielsweise geeignet sein, um eine Dimensionalität der Daten zu reduzieren und beispielsweise so Ähnlichkeiten und Gemeinsamkeiten im Rahmen der zugeführten Daten zu erkennen.

Ein Neuronales Netz kann beispielsweise auch als ein so genanntes Klassifizierungs-Netz ausgebildet sein, welches besonders dazu geeignet ist, Daten in Kategorien einzuteilen. Derartige Klassifizierungs-Netze werden beispielsweise in Zusammenhang mit Handschrift-Erkennung eingesetzt.

Eine weitere mögliche Struktur eines neuronalen Netzes kann beispielsweise die Ausgestaltung als so genanntes "Deep-Believe-Network" sein.

Ein neuronales Netz kann beispielsweise auch eine Kombination von mehreren der vorstehend genannten Strukturen aufweisen. So kann beispielsweise die Architektur des neuronalen Netzes eine Auto-Encoder-Struktur umfassen, um die Dimensionalität der Eingangsdaten zu reduzieren, welche dann weiterhin mit einer anderen Netzstruktur kombiniert werden kann, um beispielsweise Besonderheiten und/oder Anomalien innerhalb der datenreduzierten Dimensionalität zu erkennen bzw. die datenreduzierte Dimensionalität zu klassifizieren.

Die die einzelnen Knoten und deren Verbindungen beschreibenden Werte inklusive weiterer ein bestimmtes neuronale Netz beschreibende Werte können beispielsweise in einem das neuronale Netz beschreibenden Wertesatz in einer Speichereinrichtung gespeichert werden. Ein solcher gespeicherter Wertesatz, oder auch die Speichereinrichtung mit dem gespeicherten Wertesatz, stellt dann beispielsweise eine Ausgestaltung des neuronalen Netzes dar. Wird ein solcher Wertesatz nach einem Training des neuronalen Netzes gespeichert, so wird damit beispielsweise eine Ausgestaltung eines trainierten neuronalen Netzes gespeichert. So ist es beispielsweise möglich, in einem ersten Computersystem das neuronale Netz mit entsprechenden Trainingsdaten zu trainieren, den entsprechenden Wertesatz, welcher diesem neuronalen Netz zugeordnet ist, dann zu speichern und als Ausgestaltung des trainierten neuronalen Netzes in ein zweites System zu transferieren.

Ein neuronales Netz kann in der Regel trainiert werden, indem über verschiedenste bekannte Lernmethoden durch Eingabe von Eingangsdaten in das neuronale Netz und Analyse der dann entsprechenden Ausgangsdaten aus dem neuronalen Netz Parameterwerte für die einzelnen Knoten oder für deren Verbindungen ermittelt werden. Auf diese Weise kann ein neuronales Netz mit bekannten Daten, Mustern, Reizen oder Signalen auf an sich heute bekannte Weise trainiert werden, um das so trainierte Netz dann nachfolgend beispielsweise zur Analyse weiterer Daten verwenden zu können.

Allgemein wird unter dem Training des neuronalen Netzes verstanden, dass die Daten, mit welchen das neuronale Netz trainiert wird, im neuronalen Netz mithilfe eines oder mehrerer Trainings-Algorithmen verarbeitet werden, um so genannte Vorspannungswerte ("Bias"), Gewichtungswerte ("weights") und/oder Transferfunktionen ("Transfer Functions") der einzelnen Knoten des neuronalen Netzes bzw. der Verbindungen zwischen jeweils zwei Knoten innerhalb des neuronalen Netzes zu berechnen bzw. zu verändern.

Zum Training eines neuronalen Netzes, z.B. gemäß der vorliegenden Beschreibung, kann beispielsweise eine der Methoden des so genannten "überwachten Lernens" ("supervised learning") verwendet werden. Hierbei werden einem Netz durch Training mit entsprechenden Trainingsdaten diesen Daten jeweils zugeordnete Ergebnisse oder Fähigkeiten antrainiert. Weiterhin kann zum Training des neuronalen Netzes auch eine Methode des so genannten unüberwachten Trainings ("unsupervised learning") verwendet werden. Ein solcher Algorithmus erzeugt für eine gegebene Menge von Eingaben beispielsweise ein Modell, welches die Eingaben beschreibt und daraus Vorhersagen ermöglicht. Dabei gibt es beispielsweise Clustering-Verfahren, mit welchen sich die Daten in verschiedene Kategorien einteilen lassen, wenn sie sich beispielsweise durch charakteristische Muster voneinander unterscheiden.

Beim Trainieren eines neuronalen Netzes können auch überwachte und unüberwachte Lernmethoden kombiniert werden, beispielsweise wenn Teilen der Daten antrainierbare Eigenschaften oder Fähigkeiten zugeordnet sind, während dies bei einem anderen Teil der Daten nicht der Fall ist.

Weiterhin können auch noch Methoden des so genannten bestärkenden Lernens ("reinforcement learning") für das Training des neuronalen Netzes, zumindest unter anderem, verwendet werden.

Beispielsweise kann ein Training, welches eine relativ hohe Rechenleistung eines entsprechenden Computers erfordert, auf einem hochperformanten System geschehen, während weitere Arbeiten oder Datenanalysen mit dem trainierten neuronalen Netzes dann durchaus auf einem niedriger-performanten System durchgeführt werden kann. Solche weitere Arbeiten und/oder Datenanalysen mit dem trainieren neuronalen Netz können zum Beispiel auf einem Assistenzsystem und/oder auf einer Steuereinrichtung, einem EDGE-Device, einer Speicherprogrammierbaren Steuerung oder einer modularen Speicherprogrammierbaren Steuerung oder weiteren entsprechenden Einrichtungen gemäß der vorliegenden Beschreibung erfolgen.

Unter dem Auslösen einer sicheren Reaktion kann beispielsweise das Auslösen einer Sicherheitsfunktion eines sicherheitsgerichteten Systems im Sinne des Standards IEC 61508 verstanden werden.

Solch ein Auslösen einer sicheren Reaktion kann beispielsweise erreicht werden, indem bestimmte gemessene Sensorwerte bestimmte, im sicherheitsgerichteten System vorgegebene Grenzwerte überschreiten. Weiterhin kann auch das Einnehmen eines bestimmten vorgegebenen Sensorwerts eine entsprechende sichere Reaktion auslösen. Beispielsweise für solche Sensorwerte können beispielsweise der Sensorwert einer Lichtschranke oder eines Berührungsschalters sein oder auch Messwerte für bestimmte Temperaturen, gemessene Schadstoffkonzentrationen, bestimmte akustische Informationen, Helligkeitswerte oder ähnliche Sensorwerte sein. Entsprechende Sensoren können beispielsweise jegliche Art von Licht- oder Berührungssensoren, chemische Sensoren, Temperatursensoren, verschiedenste Kameras oder vergleichbare Sensoren sein.

Weiterhin kann das Auslösen einer sicheren Reaktion im Rahmen einer sicherheitsgerichteten Steuerung beispielsweise auch dadurch erreicht werden, dass bestimmte im Rahmen der sicherheitsgerichteten Steuerung verwendete Variablen vorbestimmte Werte einnehmen oder bestimmte Grenzwerte über- und/oder unterschreiten. Solche Variablen können beispielsweise Variablen sein, welche in einem sogenannten Prozessabbild einer speicherprogrammierbaren Steuerung gespeichert sind oder/und im Rahmen des Ablaufs eines sicherheitsgerichteten Steuerprogramms verwendet werden. Weiterhin können derartige Variablen auch beispielsweise sogenannte Flags oder auch sogenannte Tags sein, wie sie im Rahmen der Steuerung eines Systems oder eines zugehörigen SCADA-Systems (SCADA: Supervisory Control and Data Acquisition / Bedienen- und Beobachten-System) verwendet werden können.

Die Speichereinrichtung und/oder die Modul-Speichereinrichtung kann dabei als eine elektronische Speichereinrichtung bzw. digitale Speichereinrichtung ausgebildet und eingerichtet sein.

Solch eine Speichereinrichtung kann beispielsweise als ein nicht flüchtiger Datenspeicher ausgebildet sein (ein sogenannter "non-volatile memory"), der zur dauerhaften bzw. längerfristigen Datenspeicherung ausgebildet und eingerichtet ist. Solche Speichereinrichtungen können beispielsweise als SSD-Speicher, SSD-Karten, Festplatten, CDs, DVDs, EPROMs oder Flash-Speicher oder vergleichbare Speichereinrichtungen sein.

Weiterhin kann eine Speichereinrichtung auch als flüchtiger Speicher ("volatile memory") ausgebildet und eingerichtet sein. Solche Speicher können beispielsweise als sogenanntes DRAM oder dynamisches RAM ("Dynamic Random Access Memory") oder SRAM ("static Random Access Memory") ausgebildet und eingerichtet sein.

Eine Speichereinrichtung mit einem darin gespeicherten ML-Modell kann beispielsweise auch als ein integrierter Schaltkreis ausgebildet und eingerichtet sein, in welchem zumindest unter anderem das ML-Modell implementiert ist.

Für das Ermitteln eines sicheren Zustands relevante Daten können beispielsweise Daten sein, wie sie auch für das Auslösen einer sicheren Reaktion verwendet werden oder verwendet werden können. Weiterhin können auch für das Ermitteln eines sicheren Zustands relevante Daten solche Daten sein, welche beispielsweise dafür relevant sein können, welcher sichere Zustand in einer bestimmten Situation eingenommen werden soll, beispielsweise bei einer Auswahl mehrerer sicherer Zustände oder einer Auswahl eines bestimmten Parameters eines sicheren Zustands aus einem möglichen Parameterbereich.

So können beispielsweise bei bewegten Vorrichtungen oder Gegenstände solche für das Ermitteln eines sicheren Zustands relevante Daten eine Position und/oder eine Geschwindigkeit der Vorrichtung oder entsprechender Teile der Vorrichtung bzw. der Gegenstände sein. So können beispielsweise bei einer Achterbahn mit einem Looping die Geschwindigkeit und die Position eines bestimmten Wagens der Achterbahn für das Ermitteln eines sicheren Zustands relevante Daten sein. So können beispielsweise abhängig davon, ob sich bei einer festgestellten sicherheitsrelevanten Störung ein bestimmter Wagen mitten in einem Looping befindet oder auf ebener Strecke, unterschiedliche sichere Reaktionen ausgelöst werden. Auf diese Weise kann z.B. sichergestellt werden, dass bei einem entsprechenden Notfall ein entsprechender Wagen nicht mitten in einem Looping gestoppt wird. Bei chemischen Anlagen können derartige Parameterwerte beispielsweise Messwerte für bestimmte Stoffe und/oder Gase oder auch Temperaturen bestimmter Substanzen oder Gefäße sein. In Abhängigkeit von diesen Werten kann beispielsweise jeweils ein unterschiedlicher sicherer Zustand ermittelt werden, abhängig davon, wo genau bestimmte Stoff-Messwerte oder Temperatur-Messwerte liegen.

Im Prinzip kann jeder Mess- und/oder Sensorwert (auch ein Sensorwert eines sogenannten "virtuellen Sensors"), der im Rahmen einer Steuerung einer Vorrichtung oder Anlage anfällt, als für das Ermitteln eines sicheren Zustands relevantes Datum herangezogen werden.

Solche für das Ermitteln eines sicheren Zustands relevante Daten können beispielsweise im Sinne des Standards IEC 61508 ausgebildet und eingerichtet sein und beispielsweise beim Auslegen eines entsprechenden sicherheitsgerichteten Systems gemäß diesem Standard im Rahmen beispielsweise einer Sicherheitsintegrität festgelegt werden.

Die Anwendung der für das Ermitteln eines sicheren Zustands relevanten Daten auf das ML-Modell kann beispielsweise derart ausgebildet und eingerichtet sein, dass die für das Ermitteln eines sicheren Zustands relevanten Daten als Eingangsdaten für das ML-Modell verwendet werden. Ausgangsdaten des ML-Modells können dann beispielsweise Daten sein, welche einen bestimmten sicheren Zustand charakterisieren. Dann kann ein Verfahren gemäß der vorliegenden Beschreibung beispielsweise derart ausgebildet und eingerichtet sein, dass nachfolgend der entsprechende sichere Zustand, beispielsweise ein erster sicherer Zustand gemäß der vorliegenden Beschreibung, vom entsprechenden sicherheitsgerichteten System eingenommen wird.

Wie im Rahmen der vorliegenden Beschreibung bereits erläutert, können derartige ML-Modelle beispielsweise entsprechend trainierten Neuronalen Netze, Entscheidungsbäume, Stützvektormaschinen, Sequenzielle Entscheidungsmodelle und/oder vergleichbare ML-Modelle sein. Dabei kann das Training der entsprechenden ML-Modelle beispielsweise gemäß der vorliegenden Beschreibung ausgebildet und eingerichtet sein.

Das Verfahren gemäß der vorliegenden Beschreibung kann beispielsweise weiterhin derart ausgebildet und eingerichtet sein, dass die Ausgangsdaten des ML-Modells unmittelbar zum Auslösen eines entsprechenden sicheren Zustands ausgebildet und eingerichtet sein - z.B. aus entsprechenden Steuerbefehlen bestehen oder solche umfassen.

Weiterhin können die Ausgangsdaten des ML-Modells auch Bezeichnungen und/oder entsprechende Idee-Kennungen oder sonstige charakterisierende Daten für einen entsprechenden sicheren Zustand sein. In diesem Fall können beispielsweise nachfolgend entsprechende Parameterwerte für den ermittelten sicheren Zustand beispielsweise einer Datenbank entnommen werden und daraufhin das Erreichen des sicheren Zustands durch das sicherheitsgerichtete System ausgelöst werden.

In einer vorteilhaften Ausgestaltung kann ein Verfahren gemäß der vorliegenden Beschreibung derart ausgebildet und eingerichtet sein,
dass bezüglich der sicherheitsgerichteten Steuerung der Vorrichtung oder Anlage eine Mehrzahl von sicheren Zuständen gespeichert ist,
und der erste sichere Zustand vermittels der Anwendung der für das Ermitteln eines sicheren Zustands relevanten Daten auf das ML-Modell aus der Mehrzahl von sicheren Zuständen ausgewählt wird.

Dabei kann die sicherheitsgerichtete Steuerung der Vorrichtung oder Anlage beispielsweise wiederum vermittels des Ablaufs des sicherheitsgerichteten Steuerprogramms erfolgen.

Im Rahmen der Mehrzahl von sicheren Zuständen kann beispielsweise jeder der sicheren Zustände gemäß der vorliegenden Beschreibung ausgebildet und eingerichtet sein.

Die Speicherung eines sicheren Zustands im Rahmen der Mehrzahl von sicheren Zuständen kann beispielsweise eine Kennung oder ID-Information des sicheren Zustands, ein oder mehrere den sicheren Zustand charakterisierender Parameter des sicherheitsgerichteten Systems und/oder ein oder mehrere Kommandos oder Befehle umfassen, welche das Einnehmen des sicheren Zustands auslösen. Dabei kann jeder der sicheren Zustände aus der Mehrzahl von sicheren Zuständen derartige Daten umfassen.

Das Ergebnis der Auswahl des ersten sicheren Zustands aus der Mehrzahl von sicheren Zuständen kann beispielsweise eine Kennung und/oder ID-Information für diesen ersten sicheren Zustand sein oder auch oder umfassen - oder auch aus bestimmten den ersten sicheren Zustand charakterisierenden Parametern und/oder Befehlen bestehen oder solche umfassen.

Die Speicherung der Mehrzahl von sicheren Zuständen kann beispielsweise in einer Speichereinrichtung gemäß der vorliegenden Beschreibung erfolgen. Eine derartige Speicherung kann beispielsweise in einer mit einer sicherheitsgerichteten Steuerung verbundenen Recheneinheit oder auch einer sicherheitsgerichteten Steuerung selbst erfolgen bzw. die entsprechende Speichereinrichtung kann in mindestens einer dieser Geräte vorliegen. Dabei kann die Mehrzahl von sicheren Zuständen beispielsweise weiterhin im Rahmen einer Datenbank für sichere Zustände in der Speichereinrichtung bzw. der Recheneinheit oder der sicherheitsgerichteten Steuerung gespeichert sein.

Weiterhin kann ein Verfahren gemäß der vorliegenden Beschreibung derart ausgebildet und eingerichtet sein,
dass vermittels der Anwendung der für das Ermitteln eines sicheren Zustands relevanten Daten auf das ML-Modell eine Abfolge von sicheren Zuständen aus der Mehrzahl von sicheren Zuständen ausgewählt wird,
wobei die Abfolge von sicheren Zuständen den ersten sicheren Zustand sowie mindestens einen weiteren sicheren Zustand umfasst.

Dabei kann jeder der sicheren Zustände der Abfolge von sicheren Zuständen gemäß der vorliegenden Beschreibung ausgebildet und eingerichtet sein.

Die Abfolge von sicheren Zuständen kann dabei derart ausgebildet und eingerichtet sein, dass nach Erreichen eines ersten sicheren Zustands der Abfolgen von sicheren Zuständen das Einnehmen eines zweiten sicheren Zustands der Abfolge von sicheren Zuständen ausgelöst wird. Entsprechend können dann mehrere oder auch alle sicheren Zustände der Abfolge von sicheren Zuständen nach dem Auslösen der sicheren Reaktion nacheinander eingenommen werden.

Dabei kann die Auswahl der Abfolge von sicheren Zuständen beispielsweise derart erfolgen, dass im Rahmen des Auslösens der sicheren Reaktion ein möglichst geringer wirtschaftlicher Schaden erzeugt wird.

Eine solche Abfolge von sicheren Zuständen kann beispielsweise einen Not-Halt einer Vorrichtung oder Anlage umfassen, z.B. nach Erkennung einer Person in einem kritischen Vorrichtungs- oder Anlagenbereich. Dem nachfolgend können dann in einem nächsten sicheren Zustand entsprechende Sicherheitsmaßnahmen ausgelöst werden, um dann in einem weiteren nachfolgenden sicheren Zustand ein sicheres erneutes Hochfahren der Vorrichtung oder Anlage mit verlangsamten Anlaufparametern auszulösen.

Beispielsweise kann eine Abfolge von sicheren Zuständen auch im Rahmen einer sicherheitsgerichteten Steuerung einer Achterbahn mit einem eingebauten Looping vorliegen. Hier könnte nach einem Auftreten eines Fehlerfall, während sich ein Wagen im Looping befindet, zuerst ein erster sicherer Zustand eingenommen werden, welcher z.B. ein zusätzliches Verriegeln der Haltestangen und ggf. das Auslösen eines Gurtstraffers umfasst, wobei der Wagen aber weiterfährt. Erst nachdem der Wagen den Looping verlassen hat wird dann ein zweiter sicherer Zustand eingenommen, der dann z.B. einen Notstopp des Wagens umfasst.

Ein Verfahren gemäß der vorliegenden Beschreibung kann weiterhin derart ausgebildet und eingerichtet sein,
dass der erste sichere Zustand durch mindestens einen Vorrichtungs- und/oder Anlagenparameter festgelegt ist und dieser mindestens eine Vorrichtungs- und/oder Anlagenparameter mindestens einen Parameter-Wertebereich umfasst, und dass weiterhin im Rahmen der Anwendung der für das Ermitteln eines sicheren Zustands relevanten Daten auf das ML-Modell weiterhin ein Parameter-Wert oder eine Abfolge von Parameterwerten aus dem Parameter-Wertebereich ermittelt wird.

Dabei kann ein Vorrichtung- und/oder Anlagenparameter beispielsweise jeder einer Vorrichtung oder Anlage zugeordnete oder zuordenbare Sensorwert oder Steuerungsparameter-Wert sein. Sensorwerte können dabei Werte real vorliegender Sensoren oder auch sogenannter virtueller Sensoren sein. Weiterhin können Vorrichtung- und/oder Anlagenparameter auch Variablen und Rechengrößen sein, wie sie beispielsweise innerhalb einer entsprechenden sicherheitsgerichteten Steuerung verwendet werden. Solche Variablen oder Rechengrößen können beispielsweise Variablen eines Prozessabbildes einer speicherprogrammierbaren Steuerung oder auch im Rahmen eines Steuerprogramms verwendete Variablen oder Rechenwerte sein. Weiterhin können entsprechende Variablen auch im Rahmen eines Benutzerinterfaces verwendete sogenannte "Tags" sein.

Der Parameter-Wertebereich kann dabei zum Beispiel durch einen oberen und einen unteren Grenzwert, nur einen oberen Grenzwert oder auch nur einen unteren Grenzwert gegeben sein oder einen solchen Parameter-Wertebereich umfassen.

Weiterhin kann ein Parameter-Wertebereich auch beispielsweise eine Anzahl möglicher Parameter-Einzelwerte umfassen oder aus einer solchen Anzahl möglicher Parameter-Einzelwerte bestehen.

Zudem kann ein Verfahren gemäß der vorliegenden Beschreibung derart ausgebildet und eingerichtet sein, dass das ML-Modell als ein in einer Speichereinrichtung gespeichertes Ergebnis der Anwendung eines maschinellen Lernverfahrens auf ML-Trainingsdaten ausgebildet und eingerichtet ist.

Dabei können die ML-Trainingsdaten zum Trainieren des ML-Modells gemäß der vorliegenden Beschreibung ausgebildet und eingerichtet sein. Auch die Anwendung des maschinellen Lernverfahrens auf die ML-Trainingsdaten kann gemäß der vorliegenden Beschreibung ausgebildet und eingerichtet sein.

Die vorstehend genannte Aufgabe wird weiterhin gelöst durch eine sicherheitsgerichtete Steuerungseinrichtung zur sicherheitsgerichteten Steuerung einer Vorrichtung oder Anlage vermittels des Ablaufs eines sicherheitsgerichteten Steuerprogramms, wobei die sicherheitsgerichtete Steuerungseinrichtung zur Durchführung eines Verfahrens gemäß der vorliegenden Beschreibung ausgebildet und eingerichtet ist.

Die vorstehend genannte sicherheitsgerichtete Steuerungseinrichtung löst die vorstehend genannte Aufgabe, da in der sicherheitsgerichteten Steuerungseinrichtung Mechanismen implementiert sind, welche ein Verfahren zur Bestimmung und/oder Auswahl eines sicheren Zustands darstellen.

Dabei können die sicherheitsgerichtete Steuerungseinrichtung, die Vorrichtung oder Anlage, sowie das sicherheitsgerichtetes Steuerprogramm gemäß der vorliegenden Beschreibung ausgebildet und eingerichtet sein.

Eine solche sicherheitsgerichtete Steuerungseinrichtung kann weiterhin derart ausgebildet und eingerichtet sein, dass die Sicherheitsgerichtete Steuerungseinrichtung die Speichereinrichtung mit dem ML-Modell umfasst,
oder dass die sicherheitsgerichtete Steuerungseinrichtung kommunikativ mit der Speichereinrichtung mit dem ML-Modell gekoppelt ist.

Dabei kann die sicherheitsgerichtete Steuerungseinrichtung, die Speichereinrichtung und/oder das ML-Modell gemäß der vorliegenden Beschreibung ausgebildet und eingerichtet sein.

Dass die Steuerungseinrichtung kommunikativ mit der das ML-Modell umfassenden Speichereinrichtung gekoppelt ist kann
beispielsweise derart ausgebildet und eingerichtet sein, dass Steuerungseinrichtung und Speichereinrichtung innerhalb eines Geräts kommunikativ verknüpft sind, oder auch dass sich Steuerungseinrichtung und Speichereinrichtungen unterschiedlichen Geräten befinden, welche über eine entsprechende Datenverbindung, drahtgebunden oder auch drahtlos, verbunden sind.

Zudem kann eine sicherheitsgerichtete Steuerungseinrichtung gemäß der vorliegenden Beschreibung derart ausgebildet und eingerichtet sein,
dass die sicherheitsgerichtete Steuerungseinrichtung als eine modulare sicherheitsgerichtete Steuerungseinrichtung mit einem sicherheitsgerichteten Zentralmodul ausgebildet und eingerichtet ist,
und dass das sicherheitsgerichtete Zentralmodul die Speichereinrichtung mit dem ML-Modell umfasst.

Dabei kann das sicherheitsgerichtete Zentralmodul beispielsweise zum Ablauf des sicherheitsgerichteten Steuerprogramms ausgebildet und eingerichtet sein. Insbesondere kann das Zentralmodul konform mit den Richtlinien der funktionalen Sicherheit gemäß dem Standard IEC 61508, oder vergleichbaren Standards, ausgebildet und eingerichtet sein, insbesondere gemäß diesem Standard, oder vergleichbaren Standards, zertifiziert sein.

Dass das sicherheitsgerichtete Zentralmodul die Speichereinrichtung mit dem ML-Modell umfasst, kann beispielsweise derart ausgebildet und eingerichtet sein, dass das sicherheitsgerichtete Zentralmodul die das ML-Modell umfassende Speichereinrichtung umfasst.

In einer vorteilhaften Ausgestaltung kann die sicherheitsgerichtete Steuerungseinrichtung weiterhin derart ausgebildet und eingerichtet sein, dass die sicherheitsgerichtete Steuerungseinrichtung als eine modulare sicherheitsgerichtete Steuerungseinrichtung mit einem sicherheitsgerichteten Zentralmodul und einem KI-Modul ausgebildet und eingerichtet ist,
dass das sicherheitsgerichtete Zentralmodul und das KI-Modul über einen Rückwandbus der sicherheitsgerichteten Steuerungseinrichtung kommunikativ gekoppelt sind,
und dass das KI-Modul die Speichereinrichtung mit dem ML-Modell umfasst.

Dabei wird unter einem Rückwandbus ein Datenverbindungs-System einer modularen speicherprogrammierbaren Steuerung verstanden, welches zur Kommunikation zwischen verschiedenen Modulen der modularen speicherprogrammierbaren Steuerung ausgebildet und eingerichtet ist. Dabei kann der Rückwandbus beispielsweise eine bauliche Bus-Komponente umfassen, welche zur Übertragung von Informationen zwischen verschiedenen Modulen der speicherprogrammierbaren Steuerung ausgebildet und eingerichtet ist. Der Rückwandbus kann auch derart ausgebildet und eingerichtet sein, dass er erst im Rahmen der Montage verschiedener Module der speicherprogrammierbaren Steuerung aufgebaut wird (Z.B. als eine sogenannte "Daisy Chain" aufgebaut ist).

Die entsprechende Steuerungseinrichtung kann dann beispielsweise derart ausgebildet und eingerichtet sein, dass beim Auslösen einer sicheren Reaktion die für das Ermitteln eines sicheren Zustands relevanten Daten vom Zentralmodul über den Rückwandbus an das KI-Modul übertragen werden, dort dem ML-Modell zugeführt werden und dann die vom ML-Modell ausgegebenen Daten bezüglich des ersten sicheren Zustands wieder zurück ans Zentralmodul übertragen werden. Dort können dann beispielsweise nachfolgend die notwendigen Mechanismen ausgelöst werden, die zum Einnehmen des ersten sicheren Zustands führen.

Die speicherprogrammierbare Steuerung, die Speichereinrichtung sowie das ML-Modell können weiterhin gemäß der vorliegenden Beschreibung ausgebildet und eingerichtet sein.

Es ist ein Vorteil dieser Ausgestaltung der Erfindung, dass die sicherheitsgerichtete Steuereinrichtung durch Verwendung eines KI-Moduls flexibel an verschiedene Systeme angepasst werden kann, welche beispielsweise verschiedenartige ML-Modelle erfordern. Weiterhin kann auf diese Weise auch ein besser trainiertes ML-Modell in einem neuen KI-Modul implementiert werden, welches dann ein älteres KI-Modul ersetzt. Auf diese Weise kann sehr einfach die Auswahl eines sicheren Zustands immer weiter verbessert werden.

Zudem kann die sicherheitsgerichtete Steuerungseinrichtung derart ausgebildet und eingerichtet sein,
dass das KI-Modul als ein sicherheitsgerichtetes KI-Modul ausgebildet und eingerichtet ist.

In dieser vorteilhaften Ausgestaltung kann das KI-Modul beispielsweise konform zum Standard IEC 61508 oder vergleichbaren Standards zur funktionalen Sicherheit ausgebildet und eingerichtet bzw. zertifiziert sein. Auf diese Weise ist die Kombination aus KI-Modul und Zentraleinheit vollständig einer sicherheitsgerichteten Steuerung zugänglich. Weiterhin kann auch vorgesehen sein, dass die Kombination aus Zentralmodul und KI-Modul gemäß einem Standard zur funktionalen Sicherheit, z.B. IEC 61508, zertifiziert sind bzw. gemäß diesem Standard ausgebildet und eingerichtet.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
- Figur 1: ein Beispiel einer sicherheitsgerichteten Steuerung, welche eine entsprechende Anlage steuert;
- Figur 2: eine schematische Darstellung eines beispielhaften Ablaufs der Auswahl eines sicheren Zustands über ein ML-Modell.

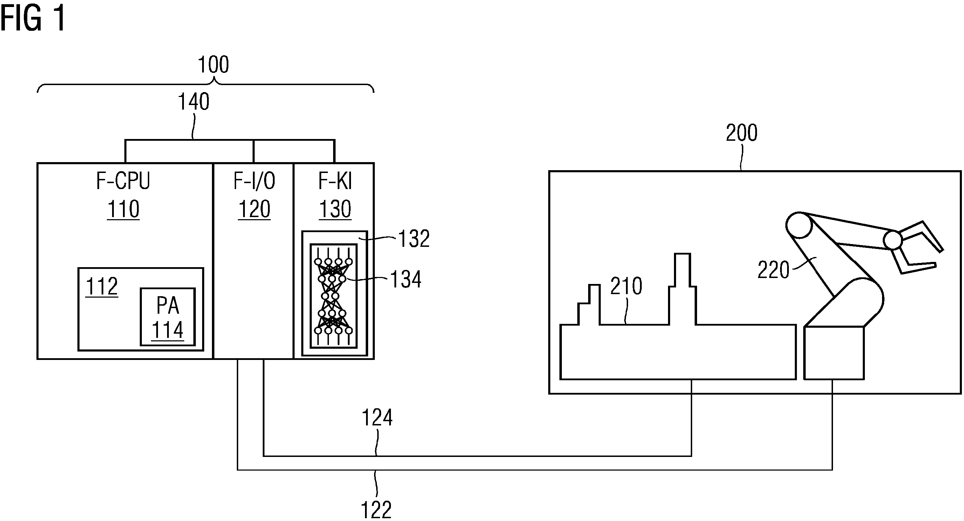

Figur 1 zeigt eine sicherheitsgerichtete modulare Steuereinrichtung 100, die innerhalb der vorliegenden Beschreibung auch als modulare SPS 100 bezeichnet wird. Die modulare SPS 100 umfasst eine sicherheitsgerichtete Zentraleinheit 110 mit einer Speichereinrichtung 112. Innerhalb der Speichereinrichtung 112 ist ein sogenanntes Prozessabbild 114 der Zentraleinheit 110 gespeichert.

Die Zentraleinheit 110 ist zum Ablauf eines sicherheitsgerichteten Steuerprogramms ausgebildet und eingerichtet und als eine sicherheitsgerichtete Zentraleinheit 110 gemäß dem Standard IEC 61508 ausgebildet und eingerichtet. Über einen Rückwandbus 140 ist die Zentraleinheit 110 mit einem Eingabe-Ausgabe-Modul 120 verbunden, welches ebenfalls als ein sicherheitsgerichtetes Eingabe-Ausgabe-Modul 120 ausgebildet und eingerichtet ist. Im Prozessabbild 114 sind dabei Eingabe- und Ausgabewerte des sicherheitsgerichteten Steuerprogramms gespeichert.

Weiterhin ist über den Rückwandbus 140 ein KI-Modul 130 mit der Zentraleinheit 110 sowie dem Eingabe-Ausgabe-Modul 120 verbunden. Das KI Modul 130 ist ebenfalls als ein sicherheitsgerichtetes KI-Modul 130 ausgebildet und eingerichtet. Es umfasst eine Speichereinrichtung 132 mit einem trainierten neuronalen Netz 134 und ist ein Beispiel für ein KI-Modul gemäß der vorliegenden Beschreibung. Das neuronale Netz 134 ist ein Beispiel für ein ML-Modell gemäß der vorliegenden Beschreibung. Das Training des neuronalen Netzes 134 ist beispielsweise mit einem Verfahren und Daten erfolgt, wie sie in der vorliegenden Beschreibung vorgestellt wurden.

Weiterhin ist in Figur 1 eine Anlage 200 dargestellt, welche eine Transporteinrichtung 210 und einen Roboter 220 umfasst. Die modulare SPS 100 ist zur sicherheitsgerichteten Steuerung dieser Anlage 200 ausgebildet und eingerichtet. Dazu ist beispielsweise das Eingabe-Ausgabe-Modul 120 über eine erste Datenleitung 124 bzw. erste Feldbusleitung 124 mit den Transportmodul 210 der Anlage 200 verbunden. Weiterhin ist über eine zweite Datenleitung 122 bzw. zweite Feldbusleitung 122 das Eingabe-Ausgabe-Modul 120 mit dem Roboter 220 der Anlage 200 verbunden. Über die Feldbusleitungen 122, 124 werden Steuersignale von der von der modularen SPS 100 zu den Komponenten 210, 220 der Anlage 200 übertragen und entsprechende Sensor- oder Gerätedaten von der Anlage 200 zurück zur modularen SPS 100.

Im Rahmen der sicherheitsgerichteten Steuerung der Anlage 200 durch die modulare SPS 100 wird im Rahmen einer zyklischen Abarbeitung des sicherheitsgerichteten Steuerprogramms, welches in der Zentraleinheit 110 der modularen SPS 100 abläuft, zu Beginn eines Programmzyklus Daten des Prozessabbildes 114 eingelesen. Diese werden im Rahmen des Ablaufs des Programmzyklus verarbeitet und dann die dabei ermittelten Ergebnisse als aktuelle Steuerdaten im Prozessabbild 114 wieder gespeichert. Diese aktuellen Steuerdaten werden dann über den Rückwandbus 140 und die Eingabe-Ausgabe-Baugruppe 120 sowie die Feldbusleitungen 124, 122 an die Anlage 200 übertragen. Entsprechende Sensor- oder sonstige Daten der Anlage 200 werden auf demselben Weg wieder zurück in die modulare SPS 100 und das Prozessabbild 114 in der Zentraleinheit 110 übertragen.

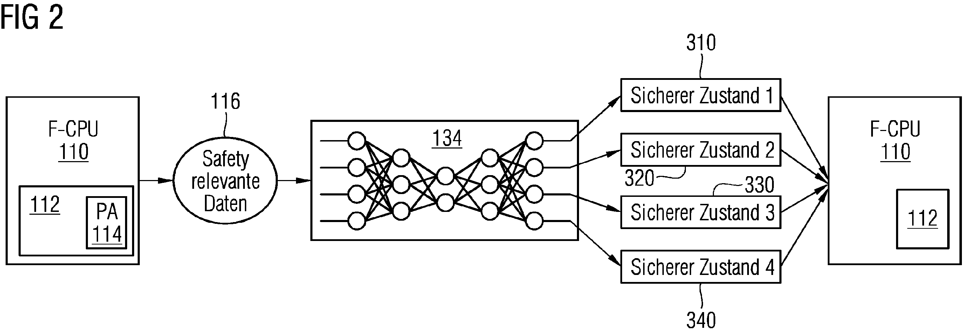

Figur 2 zeigt nun einen beispielhaften schematischen Ablauf für den Fall, dass im Rahmen der sicherheitsgerichteten Steuerung der Anlage 200 eine sichere Reaktion ausgelöst wird.

Dafür sind in der Speichereinrichtung 112 der Zentraleinheit 110 der modularen SPS 100 jeweils Parameter für die Anlage 200 bezüglich vier sicheren Zuständen 310, 320, 330, 340 gespeichert. Dabei wird über die Parameter des jeweiligen sicheren Zustands 310, 320, 330, 340 eindeutig der entsprechende sichere Zustand 310, 320, 330, 340 der Anlage 200 definiert. Dabei ist das Steuerprogramm der modularen SPS 100 derart ausgebildet und eingerichtet, dass nach Übergabe der entsprechenden Parameter eines der sicheren Zustände 310, 320, 330, 340 unmittelbar das Einnehmen des entsprechenden sicheren Zustands 310, 320, 330, 340 durch die Anlage 200 ausgelöst wird.

Figur 2 zeigt nun schematisch im Block ganz links die Zentraleinheit 110 mit der Speichereinrichtung 112 und dem Prozessabbild 114. Im Rahmen des Auslösens der sicheren Reaktion werden nun vordefinierte Daten aus dem Prozessabbild als für das Ermitteln eines sicheren Zustands relevante Daten 116 über den Rückwandbus 140 von der Zentraleinheit 110 an das KI-Modul 130 übertragen und dort in das dort gespeicherte trainierte neuronale Netz 134 als Eingangsdaten übergeben.

Das trainierte neuronale Netz 134 ist dabei derart ausgebildet und eingerichtet, dass es vier (oder mehr) Ausgänge aufweist, wobei jedem der Ausgänge einer der sicheren Zustände 310, 320, 330, 340 zugewiesen ist. Nach Eingabe der relevanten Daten 116 in das neuronale Netz 134 wird dann einer der sicheren Zustände 310, 320, 330, 340 vom neuronale Netz ausgegeben und die Information über diesen ermittelten sicheren Zustand 310, 320, 330, 340, der einem ersten sicheren Zustand gemäß der vorliegenden Beschreibung entspricht, über den Rückwandbus 140 wieder zurück an die Zentraleinheit 110 übertragen.

In der Zentraleinheit und 110 werden nun aus der Speichereinrichtung 112 die diesem ausgewählten sicheren Zustand 310, 320, 330, 340 zugeordneten Parameter ausgelesen und dem sicherheitsgerichteten Steuerprogramm derart zugeleitet, dass unmittelbar das Einnehmen des ausgewählten sicheren Zustands 310, 320, 330, 340 durch die Anlage 200 ausgelöst wird. Entsprechende Steuersignale werden dann über die Feldbusleitungen 124, 122 an die Transporteinrichtung 210 sowie den Roboter 220 der Anlage 200 übertragen.

Die vorliegende Erfindung beschreibt ein Verfahren zur Auswahl eines sicheren Zustands im Rahmen einer sicherheitsgerichteten Steuerung einer Vorrichtung oder Anlage, wobei die Auswahl des sicheren Zustands unter Verwendung eines ML-Modells erfolgt. Auf diese Weise wird ermöglicht, auf vereinfachte Art auch bei komplexeren Maschinen, Vorrichtungen oder Anlagen jeweils für bestimmte Situationen geeignete sichere Zustände einzunehmen - insbesondere solche sicheren Zustände einzunehmen, die einen möglichst geringen wirtschaftlichen Schaden nach sich ziehen.

Dabei spielt es für die Tatsache, dass es sich um eine sicherheitsgerichtete Steuerung handelt, keine Rolle, dass die Ergebnisse eines ML-Modells möglicherweise für einen Anwender nicht unmittelbar logisch nachvollziehbar sind. Für die Tatsache, dass Steuerung sicherheitsgerichtet ist, ist ausschließlich maßgeblich, dass beim Auslösen einer sicheren Reaktion in jedem Fall ein sicherer Zustand eingenommen wird. Dies ist auch im Rahmen des vorliegenden Verfahrens stets gegeben.

## Patentansprüche

1. Verfahren zur Ermittlung eines sicheren Zustands unter Verwendung einer sicherheitsgerichteten Steuerungseinrichtung (100),
wobei
- die sicherheitsgerichtete Steuerungseinrichtung (100) zur sicherheitsgerichteten Steuerung einer Vorrichtung oder Anlage (200) vermittels des Ablaufs eines sicherheitsgerichteten Steuerprogramms ausgebildet und eingerichtet ist,
- und im Rahmen eines Ablaufs des sicherheitsgerichteten Steuerprogramms in der sicherheitsgerichteten Steuerung (100) eine sichere Reaktion ausgelöst wird,
**dadurch gekennzeichnet,**
- **dass** ein ML-Modell (134) vorgesehen ist, wobei das ML-Modell (134) als ein in einer Speichereinrichtung (112, 132) gespeichertes Ergebnis der Anwendung eines maschinellen Lernverfahrens eingerichtet und ausgebildet ist,
- **dass** im Zusammenhang mit dem Auslösen der sicheren Reaktion für das Ermitteln eines sicheren Zustands relevante Daten (116) gespeichert werden,
- **dass** vermittels einer Anwendung der für das Ermitteln eines sicheren Zustands relevanten Daten (116) auf das ML-Modell (134) ein erster sicherer Zustand (310, 320, 330, 340) ermittelt wird.

2. Verfahren nach Anspruch 1,
**dadurch gekennzeichnet,**
**dass** bezüglich der sicherheitsgerichteten Steuerung der Vorrichtung oder Anlage (200) eine Mehrzahl von sicheren Zuständen (310, 320, 330, 340) gespeichert ist,
und der erste sichere Zustand (310, 320, 330, 340) vermittels der Anwendung der für das Ermitteln eines sicheren Zustands relevanten Daten (116) auf das ML-Modell (134) aus der Mehrzahl von sicheren Zuständen (310, 320, 330, 340) ausgewählt wird.

3. Verfahren nach Anspruch 2,
**dadurch gekennzeichnet,**
**dass** vermittels der Anwendung der für das Ermitteln eines sicheren Zustands relevanten Daten (116) auf das ML-Modell (134) eine Abfolge von sicheren Zuständen (310, 320, 330, 340) aus der Mehrzahl von sicheren Zuständen (310, 320, 330, 340) ausgewählt wird,
wobei die Abfolge von sicheren Zuständen (310, 320, 330, 340) den ersten sicheren Zustand (310, 320, 330, 340) sowie mindestens einen weiteren sicheren Zustand (310, 320, 330, 340) umfasst.

4. Verfahren nach einem der vorhergehenden Ansprüche, **dadurch gekennzeichnet,**
**dass** der erste sichere Zustand (310, 320, 330, 340) durch mindestens einen Vorrichtungs- und/oder Anlagenparameter festgelegt ist und dieser mindestens eine Vorrichtungs- und/oder Anlagenparameter mindestens einen Parameter-Wertebereich umfasst, und
**dass** im Rahmen der Anwendung der für das Ermitteln eines sicheren Zustands relevanten Daten (116) auf das ML-Modell (134) weiterhin ein Parameter-Wert oder eine Abfolge von Parameterwerten aus dem Parameter-Wertebereich ermittelt wird.

5. Verfahren nach einem der vorhergehenden Ansprüche, **dadurch gekennzeichnet,**
**dass** das ML-Modell (134) als ein in einer Speichereinrichtung (112, 132) gespeichertes Ergebnis der Anwendung eines maschinellen Lernverfahrens auf ML-Trainingsdaten ausgebildet und eingerichtet ist.

6. Sicherheitsgerichtete Steuerungseinrichtung (100) zur sicherheitsgerichteten Steuerung einer Vorrichtung oder Anlage (200) vermittels des Ablaufs eines sicherheitsgerichteten Steuerprogramms,
**dadurch gekennzeichnet, dass** die sicherheitsgerichtete Steuerungseinrichtung (100) zur Durchführung eines Verfahrens gemäß einem der vorstehenden Ansprüche ausgebildet und eingerichtet ist.

7. Sicherheitsgerichtete Steuerungseinrichtung gemäß Anspruch 6,
**dadurch gekennzeichnet,**
**dass** die Sicherheitsgerichtete Steuerungseinrichtung (100) die Speichereinrichtung (112, 132) mit dem ML-Modell (134) umfasst,
oder
**dass** die sicherheitsgerichtete Steuerungseinrichtung (100) kommunikativ mit der Speichereinrichtung (112, 132) mit dem ML-Modell (134) gekoppelt ist.

8. Sicherheitsgerichtete Steuerungseinrichtung gemäß Anspruch 6 oder 7,
**dadurch gekennzeichnet,**
**dass** die sicherheitsgerichtete Steuerungseinrichtung (100) als eine modulare sicherheitsgerichtete Steuerungseinrichtung (100) mit einem sicherheitsgerichteten Zentralmodul (110) ausgebildet und eingerichtet ist,
und **dass** das sicherheitsgerichtete Zentralmodul (100) die Speichereinrichtung (112, 132) mit dem ML-Modell (134) umfasst.

9. Sicherheitsgerichtete Steuerungseinrichtung gemäß Anspruch 6 oder 7,
**dadurch gekennzeichnet,**
**dass** die sicherheitsgerichtete Steuerungseinrichtung (100) als eine modulare sicherheitsgerichtete Steuerungseinrichtung (100) mit einem sicherheitsgerichteten Zentralmodul (110) und einem KI-Modul (130) ausgebildet und eingerichtet ist,
**dass** das sicherheitsgerichtete Zentralmodul (110) und das KI-Modul (130) über einen Rückwandbus (140) der sicherheitsgerichteten Steuerungseinrichtung kommunikativ gekoppelt sind, und dass das KI-Modul (130) die Speichereinrichtung (132) mit dem ML-Modell (134) umfasst.

10. Sicherheitsgerichtete Steuerungseinrichtung gemäß Anspruch 9,
**dadurch gekennzeichnet,**
**dass** das KI-Modul (130) als ein sicherheitsgerichtetes KI-Modul (130) ausgebildet und eingerichtet ist.
